# EUROPÄISCHE PATENTSCHRIFT

(11) **EP 2 563 662 B1**
(45) Veröffentlichungstag und Bekanntmachung des Hinweises auf die Patenterteilung: **14.05.2014**
(21) Anmeldenummer: 11717487.0
(22) Anmeldetag: 19.04.2011
(51) Int. Cl.: B64D 13/00

(54) **VERSORGUNGSSYSTEM ZUR VERSORGUNG VON PASSAGIEREN IN EINEM PASSAGIERRAUM EINES FAHRZEUGS**
SERVICE SUPPLY SYSTEM FOR SUPPLYING PASSENGERS IN A PASSENGER COMPARTMENT OF A VEHICLE
SYSTÈME D'APPORT DE SERVICES SERVANT À APPORTER DES SERVICES À DES PASSAGERS DANS L'ESPACE PASSAGERS D'UN VÉHICULE

(30) Priorität: 28.04.2010 US 328777 P; 28.04.2010 DE 102010018502
(43) Veröffentlichungstag der Anmeldung: 06.03.2013
(73) Patentinhaber: Airbus Operations GmbH, 21129 Hamburg (DE)
(72) Erfinder: UMLAUFT, Sebastian, 22767 Hamburg (DE); KOBLITZ, Ralf, 21129 Hamburg (DE); HALFMANN, Niklas, 20357 Hamburg (DE); KRAUSE, Dieter, 21244 Buchholz (DE)
(74) Vertreter: Schicker, Silvia
(86) Internationale Anmeldenummer: PCT/EP2011/001986
(87) Internationale Veröffentlichungsnummer: WO 2011/134614

(56) Entgegenhaltungen:
- DE-A1-102008 028 258
- DE-A1-102008 050 546
- DE-B3-102007 014 406
- US-A- 5 642 729
- US-A1- 2009 275 277
- US-A1- 2009 298 408

## Beschreibung

Die Erfindung bezieht sich auf ein Versorgungssystem zur Versorgung von Passagieren in einem Passagierraum eines Fahrzeugs, insbesondere eines Flugzeugs. Ein solches Versorgungssystem weist eine Versorgungsleitung sowie eine Anzahl von Versorgungsmodulen auf, die zur Versorgung der Passagiere mit der Versorgungsleitung verbindbar sind. Die Versorgungsmodule können hierbei eine Reihe von unterschiedlichen Komfort- und Bedienelementen umfassen, wie beispielsweise Luftdüsen, Leseleuchten, Stewardessruftasten, Lautsprecher, Sauerstoffmasken und - generatoren sowie optische Anzeigeelemente. Die Versorgungsleitung umfasst in analoger Weise Luft-, Strom- und/oder Datenleitung(en), die ggf. über entsprechende Verbindungen mit den Versorgungsmodulen verbindbar sind.

Das Versorgungssystem als solches dient in einem Fahrzeug, wie z.B. einem Flugzeug, einem Bus oder einem Zug, etc., dazu, die Passagiere in den Passagierräumen individuell mit beispielsweise Luft, Licht, Information oder dergleichen, je nachdem welche Komfort- und Bedienelemente an den Versorgungsmodulen vorgesehen sind, zu versorgen. Demgemäß sind die Versorgungsmodule bei herkömmlichen Versorgungssystemen an festen Positionen über den Sitzen vorgesehen und sind in der Regel in einem konstanten Abstand zueinander angeordnet.

Um jedoch unterschiedlichen Einsatzbedingungen gerecht werden zu können, wird es zunehmend wichtiger bei Fahrzeugen, insbesondere bei Flugzeugen, die Position der Sitze und den Abstand zwischen den Sitzreihen innerhalb des Passagierraums variabel einstellen zu können. Als Beispiel sei in diesem Zusammenhang nur ein späterer Umbau eines Flugzeugs genannt, bei dem ein Passagierraum ganz oder teilweise von der Verwendung für die Businessklasse zur Verwendung für die Touristenklasse umgestaltet werden soll (Re-Konfiguration des Sitz-Layouts). Um eine solche zu ermöglichen, sind aus der Praxis beispielsweise Anordnungen bekannt, bei denen die Sitze entlang von Schienen in Richtung der Fahrzeuglängsachse verschoben werden können. Um für die einzelnen Passagiere innerhalb des Passagierraums weiterhin die vorstehend genannten Komfort- und Bedienfunktionen bereitstellen zu können, ist es jedoch auch notwendig, die Versorgungsmodule entsprechend der veränderten Position der Sitzreihen verschieben zu können.

Aus dem Stand der Technik sind bereits Lösungen bekannt, bei denen die Luftduschen eines Luftverteilungssystems, welche oberhalb der Sitze angeordnet sind, in Längsrichtung des Fahrzeugs verschiebbar sind. So zeigt das Dokument DE 10 2007 014 406 B3 beispielsweise einen Versorgungskanal mit einem Luftverteilungssystem, der ein längliches Gehäuse mit einem sich in Längsrichtung des Gehäuses erstreckenden Hohlprofil und Luftduschenschienen aufweist. Eine Manteloberfläche des Hohlprofils weist eine Vielzahl von Perforationsöffnungen auf, an denen die Luftduschenschienen mit ihrem Lufteinlass dicht anliegen, so dass Luft durch die Perforationsöffnung aus dem Versorgungskanal in die Luftduschenschienen einströmen kann. Diejenigen Perforationsöffnungen, die nicht in einen Lufteinlass einer Luftduschenschiene münden, können durch eine aufgeklebte Klebefolie abgedichtet werden.

Das Aufkleben einer solchen Klebefolie ist jedoch mühsam und zeit- sowie kostenintensiv. Weiterhin ist es notwendig bei jeder Rekonfiguration des Passagierraums die angebrachten Klebefolienabschnitte abzuziehen sowie nach erfolgter Neupositionierung der Luftduschenschienen neue Klebefolien in entsprechender Länge an die geänderten Abstände zwischen den Luftduschenschienen anzupassen und auf die Perforationsöffnungen des Hohlprofils aufzukleben.

Weiterhin zeigt das Dokument DE 43 03 681 C1 eine Luftleitung und eine damit verbundene Luftdusche, die relativ zu der Luftleitung entlang dieser verschiebbar ist. Die Luftleitung besteht hierbei aus einem geradlinigen formsteifen Hohlprofil mit einem Längsschlitz, wobei der Längsschlitz durch mindestens eine in Ruhelange in Folge einer Vorspannung geschlossenen Dichtlippe abgedichtet ist. Zur Entnahme der Luft ist ein in Längsrichtung der Luftleitung geführter Schlitten mit einem in den Innenraum des Hohlprofils hineinragenden Entnahmestutzen vorgesehen, der mit der Luftdusche verbunden ist. Der Schlitten weist eine Außenführung und eine Innenführung auf, die mit dem Entnahmestutzen fest verbunden sind und so in einem gegenseitigen Abstand angeordnet sind, dass sie einen Zwischenraum bilden, der den Dichtlippen angepasst ist.

Als schwierig hat sich bei einer solchen Ausführungsform jedoch die Integration in die Verkleidung des Passagierinnenraums erwiesen. Weiterhin besteht das Risiko, dass die Elastizität der vorgesehenen Dichtlippe mit der Zeit abnimmt, wodurch auch die dichtende Funktion der Dichtlippe beeinträchtigt werden kann. In einem solchen Fall würde ein Teil der innerhalb der Luftleitung geführten Luft über eine nicht mehr vollständig abdichtende Dichtlippe nach außen dringen, wodurch auch der in die Luftdusche geführte Luftstrom unerwünscht beeinträchtigt würde.

Der vorliegenden Erfindung liegt somit die Aufgabe zugrunde, ein Versorgungssystem bereitzustellen, dass eine Verschiebung der Versorgungsmodule innerhalb des Passagierraums auf einfache, schnelle und kostensparende Weise ermöglicht und gleichzeitig eine zuverlässige Verbindung der Versorgungsmodule mit der Versorgungsleitung gewährleistet.

Diese Aufgabe wird durch ein Versorgungssystem mit den Merkmalen des Anspruchs 1 gelöst.

Das erfindungsgemäße Versorgungssystem weist eine Versorgungsleitung sowie eine Anzahl von Versorgungsmodulen auf, die zur Versorgung der Passagiere mit der Versorgungsleitung verbindbar sind, wobei die Versorgungsmodule entlang der Versorgungsleitung relativ zueinander verschiebbar sind. Die Versorgungsleitung weist hierbei eine oder mehrere Versorgungsöffnungen auf, durch die die Verbindung zwischen der Versorgungsleitung und den Versorgungsmodulen hergestellt werden kann. Hierbei sind, um eine Re-Konfiguration zu ermöglichen, mehr Versorgungsöffnungen vorgesehen, als für die Anzahl von Versorgungsmodulen notwendig sind. Ferner ist jedem Versorgungsmodul wenigstens eine Blende zugeordnet, die derart an der Versorgungsleitung angeordnet ist, dass sie entlang der Versorgungsleitung verschiebbar ist und einen Teil der einen Versorgungsöffnung oder der mehreren Versorgungsöffnungen abdecken kann, der nicht für die Verbindung eines Versorgungsmoduls mit der Versorgungsleitung genutzt wird.

Die Versorgungsöffnungen ermöglichen dabei einen Zugang zu beispielsweise in der Versorgungsleitung geführten Strom- und/oder Datenleitungen und/oder einer Luftleitung.

Im Falle einer einzigen Versorgungsöffnung, die beispielsweise als Schlitz oder Nut ausgebildet sein kann, bleibt ein Teil dieser Versorgungsöffnung ungenutzt, d.h. er dient nicht der Verbindung eines Versorgungsmoduls mit der Versorgungsleitung. Alternativ hierzu sind eine Vielzahl von Versorgungsöffnungen vorgesehen, wobei nicht alle für die Verbindung der Anzahl von Versorgungsmodulen mit der Versorgungsleitung genutzt werden. In beiden Fällen dient die Blende zur Abdeckung des ungenutzten Teils der Versorgungsleitungen, so dass gewährleistet ist, dass das Innere der Versorgungsleitung von außen geschützt ist und nur im Bedarfsfall, d.h. wenn beispielsweise die Blende abgenommen wird, über die Versorgungsöffnungen zugänglich wird.

Jedem Versorgungsmodul ist eine solche Blende zugeordnet, die entlang der Versorgungsleitung verschiebbar ist. Sind die Versorgungsmodule beispielsweise in Längsrichtung entlang der Versorgungsleitung hintereinander angeordnet, so kann jeweils zwischen zwei Versorgungsmodulen eine Blende vorgesehen sein. Auf diese Weise weist jede Blende zwei benachbarte Versorgungsmodule auf, wobei eines davon ihr zugeordnet ist.

In einer Ausführungsform der Erfindung kann jede Blende relativ zu wenigstens einem benachbarten Versorgungsmodul verschiebbar sein. Auf diese Weise ist gewährleistet, dass sich die Blenden nicht nur, wie die Versorgungsmodule, entlang der Versorgungsleitung verschieben lassen, sondern dass auch die Abstände zwischen den Versorgungsmodulen unabhängig von der dazwischen angeordneten Blende variiert werden können. Dabei ist denkbar, dass die Blende relativ zu beiden der Blende benachbarten Versorgungsmodulen, d.h. sowohl zu dem zugeordneten Versorgungsmoduls wie auch zu dem weiteren, ihr benachbarten Versorgungsmodul, verschiebbar ist. Alternativ ist jedoch ebenfalls denkbar, dass die Blende beispielsweise gegenüber einem der beiden Versorgungsmodule nicht relativ verschiebbar ist.

Die Verschiebbarkeit der Blende relativ zu dem Versorgungsmodul kann beispielsweise dadurch ermöglicht werden, dass die Blende zumindest teilweise in das Versorgungsmodul in Längsrichtung der Versorgungsleitung eingeschoben wird. So kann beispielsweise an dem Versorgungsmodul ein seitlicher, der Blende zugewandter Schlitz vorgesehen sein, in den sich diese ein Stück weit oder vollständig einschieben lässt.

Alternativ kann sie jedoch auch zwischen die Versorgungsleitung und das jeweilige Versorgungsmodul eingeschoben werden. Demnach kann vorgesehen sein, dass jede Blende wenigstens abschnittsweise mit wenigstens einem benachbarten Versorgungsmodul überlappend angeordnet ist. Eine überlappende Anordnung von Versorgungsmodul und Blende hat den Vorteil, dass eine zuverlässige Abdeckung der Versorgungsöffnung(en) durch eine Blende und/oder ein Versorgungsmodul gewährleistet ist.

Eine solche überlappende Anordnung von Blende und Versorgungsmodul kann entweder dadurch aufgelöst werden, dass die Blende wieder aus in entgegengesetzter Richtung aus dem Versorgungsmodul oder dem Zwischenraum zwischen Versorgungsmodul herausgezogen wird. Stattdessen kann die Blende jedoch auch im Überlappungsbereich mit dem Versorgungsmodul verbunden sein, so dass eine feste Zuordnung eines Versorgungsmoduls und einer Blende erreicht wird. Eine solche Kopplung von Blende und Versorgungsmodul kann beispielsweise durch eine Aussparung und einen korrespondierenden Vorsprung, der in die Aussparung eingreift, umgesetzt werden, wobei der Vorsprung im Überlappungsbereich an der Blende oder an dem Versorgungsmodul angeordnet sein kann, während die Aussparung an dem jeweiligen anderen Element im Überlappungsbereich angeordnet ist. Alternativ können jedoch auch das Versorgungsmodul und die diesem zugeordnete Blende einteilig miteinander ausgebildet sein. Eine solche Anordnung hat beispielsweise den Vorteil, dass die Zahl der beweglichen Teile und damit auch die der zu montierenden Teile verringert werden kann.

Es kann in einer Weiterbildung der Erfindung ferner vorgesehen sein, dass jedes Versorgungsmodul einen Vorsprung aufweist, der dazu ausgebildet ist, die Verschiebung wenigstens einer benachbarten Blende entlang der Versorgungsleitung zu begrenzen. So kann beispielsweise ein Versorgungsmodul durch den Vorsprung sicherstellen, dass eine Blende, die relativ zu diesem verschiebbar ist, indem sie zwischen die Versorgungsleitung und das Versorgungsmodul eingeschoben wird, nicht die Verbindung von Versorgungsmodul und Versorgungsleitung unterbricht.

Gleichfalls kann ein Vorsprung dazu dienen, eine Auszugsbewegung der Blende aus dem Überlappungsbereich zu begrenzen, so dass sichergestellt ist, dass die Blende und das Versorgungsmodul einen festgelegten Mindest-Überlappungsbereich aufweisen. Somit dient ein solcher Vorsprung in erster Linie zum Blockieren der Verschiebungsrichtung einer benachbarten Blende in eine einzige Richtung.

Alternativ kann ein Vorsprung jedoch auch, wie bereits vorstehend ausgeführt, zum Fixieren einer Blende an einem Versorgungsmodul genutzt werden. Auch kann der Vorsprung selbstverständlich an der Blende angeordnet sein und in gleicher Weise die Verschiebung der Blende gegenüber einem benachbarten Versorgungsmodul zumindest in einer Richtung begrenzen.

Ferner kann vorgesehen sein, dass das Versorgungssystem wenigstens eine Führungsanordnung zur Führung der Versorgungsmodule entlang der Versorgungsleitung aufweist. Dabei sind unterschiedlichste Gestaltungsvarianten einer Führungsanordnung denkbar, beispielsweise eine in Längsrichtung der Versorgungsleitung verlaufende Nut, die mit einem Vorsprung zusammenwirkt, der in die Nut eingreift, wobei die Nut oder der Vorsprung an den Versorgungsmodulen angeordnet ist; eine Aufhängung des Versorgungsmoduls an der Versorgungsleitung, wobei die Versorgungsleitung selbst als eine Führungsschiene für die Versorgungsmodule wirkt; und dergleichen.

Eine Weiterentwicklung der Erfindung kann vorsehen, dass die Versorgungsleitung ein Hohlprofil zur Leitung von Luft umfasst, das eine Manteloberfläche mit Luftauslassöffnungen aufweist, und dass jedes Versorgungsmodul wenigstens eine Anschlussöffnung zur fluidischen Verbindung mit wenigstens einer Luftauslassöffnung des Hohlprofils aufweist. Bei dieser Variante dient die Versorgungsleitung nicht nur zur Aufnahme von beispielsweise anderen Leitungen, wie Strom- und Datenleitungen, sondern sie selbst bildet zusätzlich oder alternativ die Luftleitung.

Zur Abgabe der darin geführten Luft weist das Hohlprofil der Versorgungsleitung Luftauslassöffnungen an seiner Manteloberfläche auf, durch die die Luft nach Außen dringen kann. Das Hohlprofil kann im Querschnitt betrachtet dabei unterschiedlichste Formen aufweisen, beispielsweise eine runde, ovale oder eckige Form. In der Praxis hat sich ein Querschnitt als besonders vorteilhaft erwiesen, der zumindest eine gerade verlaufende Seite aufweist, so dass das Hohlprofil eine ebene Fläche bereitstellt, wodurch eine Verbindung der Versorgungsmodule mit dem Hohlprofil erleichtert wird. Bevorzugt weist die Manteloberfläche an dieser ebenen Fläche die Luftauslassöffnungen auf, wodurch eine gezielte Abgabe der innerhalb des Hohlprofils geführten Luft in Richtung der Versorgungsmodule erreicht wird.

Jedoch ist es selbstverständlich auch möglich, eine Verbindung der Versorgungsmodule an eine gekrümmte Manteloberfläche des Hohlprofils zu ermöglichen.

Zur fluidischen Verbindung der Versorgungsmodule mit der Versorgungsleitung reicht es bereits aus, wenn diese mit ihrer Anschlussöffnung an dem Bereich der Manteloberfläche fluiddichtend anliegen, in dem die Luftauslassöffnungen angeordnet sind. Auch können die Versorgungsmodule mit einem gewissen Abstand der Anschlussöffnung zu den Luftauslassöffnungen des Hohlprofils angeordnet sein, wenn beispielsweise durch zusätzliche Maßnahmen sichergestellt wird, dass die Luft nicht an dem Versorgungsmodul vorbei strömt, sondern durch die Anschlussöffnung in das Versorgungsmodul einströmt. Beispielsweise können die Versorgungsmodule über Dichtkanten, die in Richtung der Längsachse der Versorgungsleitung verlaufen, in ihrem eingebauten Zustand noch oben und unten abgedichtet sein, während sie seitlich (in ihrem eingebauten Zustand) durch die Blenden abgedichtet werden. Derartige Dichtkanten können sowohl an einem Anschlussabschnitt der Versorgungsmodule ausgebildet oder angeordnet sein, als auch an der entsprechenden Fläche der Versorgungsleitung. Weiterhin können die Blenden luftdichtend ausgebildet sein, wobei diese vorzugsweise seitlich angrenzend an die Versorgungsmodule und die Dichtkanten (Stoß-an-Stoß) oder in überlappender Stellung mit den Versorgungsmodulen angeordnet sind, so dass sie zusammen mit den Dichtkanten eine Art Luftkanal zwischen der Manteloberfläche des Hohlprofils und der Anschlussöffnung des jeweiligen Versorgungsmoduls ausbilden.

Weiterhin können die Blenden aufgrund ihrer luftdichtenden Ausbildung diejenigen Luftauslassöffnungen des Hohlprofils luftdicht abdichten, die nicht gegenüber einer Luftauslassöffnung eines Versorgungsmoduls angeordnet sind. Um die Funktion der luftdichten Abdichtung erzielen zu können, können die Blenden teilweise oder gänzlich aus einem dichtenden Material, wie beispielsweise Gummi, Schaumstoff oder dergleichen hergestellt oder mit diesem versehen sein. Beispielsweise können sie in ihrem Randbereich Gummilippen aufweisen oder auch im Bereich ihrer Anlagefläche mit einer Gummibeschichtung versehen sein.

Die Luftauslassöffnungen des Hohlprofils können die Versorgungsöffnungen der Versorgungsleitung bilden, wenn diese einzig zur Leitung von Luft dient; alternativ können die Luftauslassöffnungen jedoch auch zusätzliche Öffnungen zu den Versorgungsöffnungen bilden, wenn beispielsweise vorgesehen ist, dass die Versorgungsleitung zusätzlich eine Daten- und/oder Stromleitung aufweist, mit der die Versorgungsmodule verbunden werden sollen.

Die Luftauslassöffnungen können unterschiedliche Öffnungsquerschnitte und Durchmesser aufweisen, sie können in gleichmäßigen oder ungleichmäßigen Abständen an der Manteloberfläche angeordnet sein, sie können in der Art einer Perforation mit einer Vielzahl von Luftauslassöffnungen gebildet sein oder als einzelne Luftauslassöffnungen. In der Praxis hat sich als besonders vorteilhaft eine durchgehende Perforation entlang einer ebenen Fläche der Manteloberfläche erwiesen, da diese einfach herzustellen ist und sicherstellt, dass die Versorgungsmodule mit unterschiedlichsten Abständen zueinander an jeder beliebigen Stelle an der Versorgungsleitung angeordnet werden können.

Bei der Auslegung der Durchmesser und Querschnitte der einzelnen Luftauslassöffnungen der Perforation sind die Auswirkungen dieser Parameter auf das Strömungsverhalten der hindurchströmenden Luft zu berücksichtigen. In Passagierräumen wird daher insbesondere darauf zu achten sein, dass die hindurchströmende Luft kein störendes Pfeifgeräusch oder dergleichen erzeugt und mit ausreichend hoher Strömungsgeschwindigkeit in die Versorgungsmodule einströmen kann.

Ein weiterer Gesichtspunkt, der bei der Auslegung und Dimensionierung der Luftauslassöffnungen an der Versorgungsleitung zu berücksichtigen ist, ist die Festigkeit der Versorgungsleitung. So kann es je nach Einbausituation der Versorgungsleitung von Vorteil sein, wenn diese eine erhöhte Festigkeit aufweist, wobei in diesem Fall vorteilhaft sein kann, die Perforation nicht durchgehend zu gestalten, sondern Unterbrechungen vorzusehen. Gleiches gilt für die Durchmessergröße und die Querschnitte der Luftauslassöffnungen, die derart gewählt werden können, dass eine höhere Festigkeit der Verbindungsleitung erzielt wird.

In einer Weiterbildung der Erfindung kann vorgesehen sein, dass das Versorgungssystem ferner eine sich in einer Längsrichtung erstreckende Abdeckung mit einer vom Passagierraum abgewandten Außenfläche und einer dem Passagierraum zugewandten Innenfläche aufweist, wobei die Versorgungsleitung an der Außenfläche der Abdeckung angeordnet ist und die Versorgungsmodule an der Innenfläche der Abdeckung angeordnet sind, und wobei die Abdeckung eine oder mehrere Versorgungsöffnungen aufweist, durch die die Verbindung zwischen der Versorgungsleitung und den Versorgungsmodulen hergestellt werden kann. Die Abdeckung dient insbesondere dazu, die Versorgungsleitung abzudecken und im Passagierraum eine Innenfläche bereitzustellen, die "glatt" in die restliche Verkleidung des Passagierraums übergeht, so dass jegliche Verletzungsgefahr der Passagiere durch vorstehende Kanten oder scharfkantige Gegenstände, beispielsweise im Falle eines Unfalls, auf ein Minimum reduziert werden.

Eine solche Verkleidung, auch "Lining" genannt, ist in Fahrzeugpassagierräumen üblich. Jedoch besteht ein großes Problem darin, eine Verkleidung bereitzustellen, in die ein Versorgungssystem mit verschiebbaren Versorgungsmodulen integriert werden kann, ohne dass eine Vielzahl von zusätzlichen austauschbaren Verkleidungselementen bzw. Abdeckungen erforderlich ist, um diese an die veränderten Abstände zwischen den Versorgungsmodulen anzupassen. Dieses wird bei der vorliegenden Erfindung durch die bewegbaren Blenden erreicht, die ebenfalls zur Abdeckung der Versorgungsleitung genutzt werden.

Bei einer Weiterentwicklung der Erfindung können die Blenden an der Innenseite der Abdeckung, d.h. auf der dem Passagierraum zugewandten Seite, angeordnet sein. Dabei können die Blenden derartig ausgebildet sein, dass sie zusammen mit der Abdeckung eine nahezu glatte Oberfläche ausbilden. Bei dieser Ausführungsform ist es besonders vorteilhaft, dass bei einer Verschiebung der einzelnen Versorgungsmodule diese, wie auch die Blenden, ausgehend von dem Passagierraum verschiebbar sind, da beide an der Innenseite der Abdeckung angeordnet sind. Somit ist es nicht erforderlich, einen Teil der Abdeckung abzubauen, um an die einzelnen verschiebbaren Elemente zu gelangen und diese in die eine oder andere Längsrichtung der Versorgungsleitung zu bewegen.

Schließlich kann die Versorgungsleitung eine Daten- und/oder Stromleitung mit Schnittstellen umfassen, wobei die Versorgungsmodule durch die Versorgungsöffnung(en) mit den Schnittstellen verbunden werden können.

Nachfolgend werden bevorzugte Ausführungsbeispiele der Erfindung anhand der beigefügten schematischen Figuren erläutert. Es stellen dar:
- Figur 1: eine schematische Darstellung eines erfindungsgemäßen Versorgungssystems gemäß einer ersten Ausführungsform,
- Figuren 2a und b: die Verbindung einer Blende mit einem Versorgungsmodul eines erfindungsgemäßen Versorgungssystems gemäß Figur 1,
- Figur 3: eine schematische Darstellung des erfindungsgemäßen Versorgungssystems gemäß Figur 1 ohne Versorgungsleitung,
- Figur 4: eine isometrische Ansicht eines erfindungsgemäßen Versorgungssystems nach Figur 1 in eingebautem Zustand,
- Figur 5: eine isometrische Ansicht einer zweiten Ausführungsform eines erfindungsgemäßen Versorgungssystems,
- Figur 6: eine vergrößerte Ansicht des Ausschnitts VI der Figur 5,
- Figur 7: eine Detailansicht eines Versorgungsmoduls mit veränderter Blendenstellung des Versorgungssystems gemäß Figur 5, und
- Figur 8: eine schematische Detailansicht einer alternativen Ausführungsform der Versorgungsleitung eines erfindungsgemäßen Versorgungssystems der Figur 5.

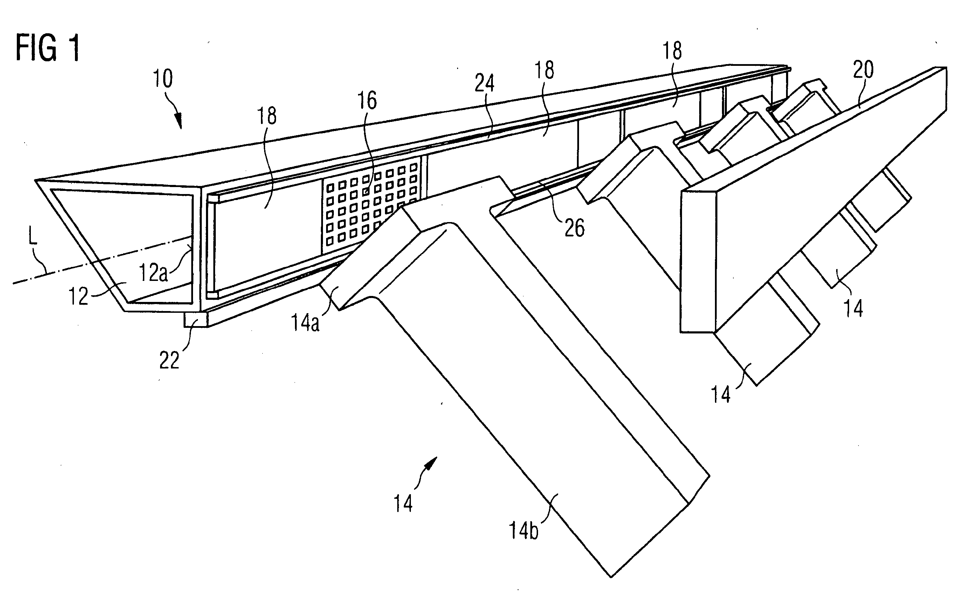

Figur 1 zeigt schematisch dargestellt eine erste Ausführungsform eines Versorgungssystems, das nachfolgend mit dem Bezugszeichen 10 versehen ist. Das Versorgungssystem 10 umfasst eine Versorgungsleitung 12, mit der mehrer Versorgungsmodule 14 verbindbar sind. Die Versorgungsleitung 12 ist in den Figuren 1 bis 4, betreffend die erste Ausführungsform, als Hohlprofil mit einem viereckigen Querschnitt dargestellt. Eine ebene Fläche 12a des Hohlprofils der Versorgungsleitung 12, die den damit zu verbindenden Versorgungsmodulen 14 zugewandt ist, weist als Versorgungsöffnungen 16 eine durchgehende oder abschnittsweise vorgesehene Perforation 16 auf. In Figur 1 ist diese Perforation 16 nur beispielhaft an einem Verbindungsabschnitt dargestellt.

Eine durchgehende Perforation der Fläche 12a kann gegenüber einzelnen Perforationsabschnitten den Vorteil haben, dass die Versorgungsmodule 14 völlig frei entlang der Längsachse L der Versorgungsleitung 12 verschoben werden können. Weiterhin wird das Gewicht der Versorgungsleitung 12 durch eine durchgängige Perforation an der Fläche 12a gegenüber einer abschnittsweise vorgesehenen Perforation gesenkt, was vorteilhaft sein kann. Jedoch sind unter anderen Gesichtspunkten auch mit Abstand zueinander angeordnete Perforationsabschnitte vorteilhaft, da in diesem Fall die Festigkeit des Hohlprofils der Versorgungsleitung 12 gegenüber einer Versorgungsleitung mit durchgehender Perforation verbessert ist und eine Abdichtung der nicht mit einem Versorgungsmodul 14 verbundenen Versorgungsöffnungen 16 der Perforation vereinfacht wird.

Zur Abdichtung derjenigen Versorgungsöffnungen 16, die nicht zur Verbindung mit einem Versorgungsmodul 14 genutzt werden, sind ferner Blenden 18 vorgesehen, die entlang der Längsachse L der Versorgungsleitung 12 verschiebbar an dieser angeordnet sind. Die Blenden 18 sind dabei als einfache rechteckförmige Abdeckplatten ausgebildet, die an der Versorgungsleitung 12 entlang geführt sind. Um eine verbesserte Abdichtung der Versorgungsöffnungen 16 mit Hilfe der Blenden 18 erreichen zu können, können die Blenden 18 im Kontaktbereich mit der Versorgungsleitung 12 mit einem dichtenden Material, beispielsweise in Form von Dichtlippen, einer dichtenden Beschichtung oder dergleichen versehen sein, so dass sichergestellt wird, dass mit Hilfe der Blenden 18 eine luftdichte Abdichtung erreicht wird. Alternativ können die Blenden 18 auch vollständig aus einem dichtenden Material, beispielsweise Gummi, Schaumstoff oder dergleichen hergestellt sein.

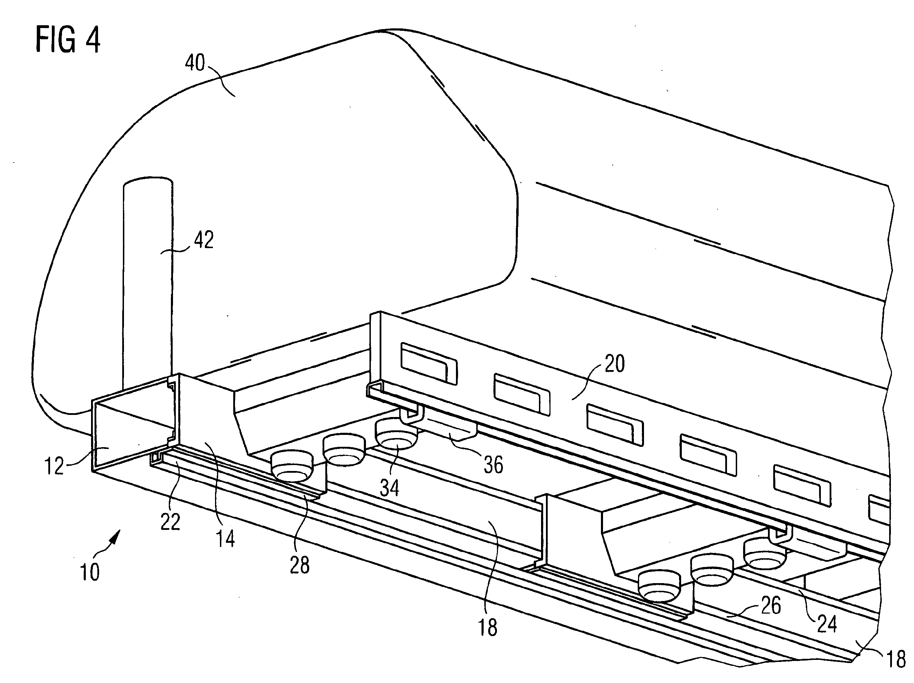

Die Versorgungsmodule 14 weisen in ihrer in den Figuren 1 bis 4 dargestellten Ausführungsform nur schematisch dargestellte Luftduschen 34 (vgl. z.B. Figur 4) auf, die an der (im montierten Zustand des Versorgungsmoduls 14) "unteren" Seite eines Versorgungsabschnittes 14b des Versorgungsmoduls 14 angeordnet sind. Jedes Versorgungsmodul 14 weist ferner einen mit dem Versorgungsabschnitt 14b verbundenen Anschlussabschnitt 14a auf, der zur Verbindung mit der Versorgungsleitung 12 in Anlage mit der ebenen Fläche 12a der Versorgungsleitung 12 gebracht wird. Der Anschlussabschnitt 14a weist eine Anschlussöffnung 14c auf, die sich von dem Anschlussabschnitt 14a zur Versorgung der Luftduschen 34 in den Versorgungsabschnitt 14b hinein erstreckt.

Die Versorgungsmodule 14 weisen im Bereich ihres Anschlussabschnitts 14a ferner eine Verbindungslippe 28 auf, die mit einer Verbindungsschiene 22 an der Versorgungsleitung 12 zusammenwirkt und die Versorgungsmodule 14 mit der Versorgungsleitung 12 verbindet. Zur Befestigung der Versorgungsmodule 14 kann ferner, wie in Figur 1 und 4 gezeigt, eine herkömmliche Befestigungsschiene 20 verwendet werden, in die ein Befestigungselement 36, das an dem freien Ende des Versorgungsabschnitts 14b des Versorgungsmoduls 14 angeordnet ist, eingeklinkt wird. Über die Verbindungsschiene 22 und die Befestigungsschiene 20 werden die Versorgungsmodule 14 zudem sicher entlang der Versorgungsleitung 12 geführt. Anstelle der dargestellten Verbindung und Befestigung der Versorgungsmodule 14 an der Versorgungsleitung 12 sind selbstverständlich auch andere Lösungen denkbar: Beispielsweise könnten an der Versorgungsleitung Verbindungsschienen vorgesehen sein, zwischen denen die Versorgungsmodule geführt werden, die Versorgungsmodule könnten die Versorgungsleitung teilweise umgreifen, die Versorgungsmodule könnten an einer separaten Schienen in einem definierten Abstand zu der Versorgungsleitung geführt sein und dergleichen. Viele solche Verbindungen und Befestigungsmechanismen sind bereits aus dem Stand der Technik bekannt, so dass an dieser Stelle nicht näher auf diese eingegangen wird.

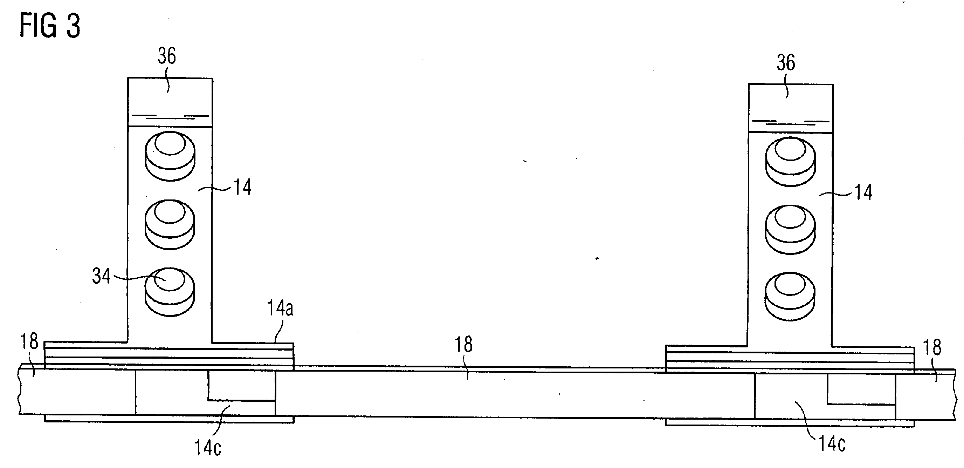

Die Blenden 18 sind ebenfalls über Führungsschienen 24 und 26 entlang der Versorgungsleitung 12 geführt. Wie in Figur 3 deutlicher zu erkennen, lassen sich die Blenden 18 sowohl relativ zur Versorgungsleitung 12 als auch zu den Versorgungsmodulen 14 verschieben. Auf diese Weise können die Versorgungsmodule 14 im Bereich ihres Anschlussabschnitts 14a in Überlappung mit den Blenden 18 gebracht werden, wobei die Blenden 18 zwischen die Versorgungsmodule 14 und die Versorgungsleitung 12 geschoben werden.

Es kann vorgesehen sein, dass die Versorgungsmodule 14 im Bereich ihres Anschlussabschnitts 14a einen Vorsprung aufweisen, der die Relativbewegung einer der benachbarten Blenden 18 in eine Richtung begrenzt, um sicherzustellen, dass die Anschlussöffnung 14c des Versorgungsmoduls 14 nicht vollständig von einer Blende 18 verdeckt wird. Ein solcher Vorsprung kann hierzu von dem Anschlussabschnitt 14a in Richtung zu der Versorgungsleitung vorstehen, so dass der Abstand zwischen dem Vorsprung und der zugewandten Fläche 12a der Versorgungsleitung nicht mehr ausreicht, damit sich eine Blende 18 dazwischenschieben kann.

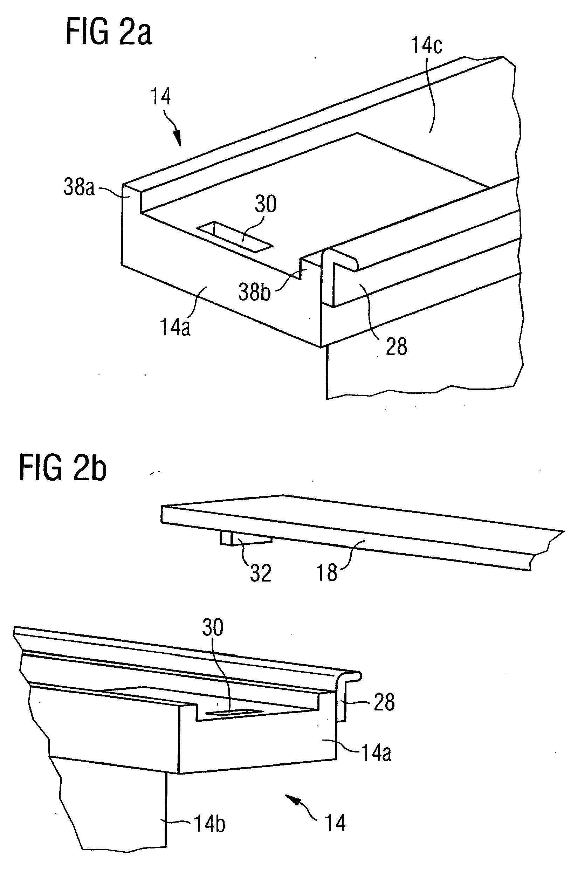

Weiterhin kann es vorteilhaft sein, jeweils eine benachbarte Blende 18 mit einem Versorgungsmodul 14 zu koppeln, so dass sich diese nicht relativ zueinander, sondern miteinander bewegen. Dies wird beispielsweise durch eine in den Figuren 2a und 2b gezeigte Kopplung erreicht, bei der an dem Versorgungsmodul 14 an dessen Anschlussabschnitt 14a eine Ausnehmung 30 vorgesehen ist, die zur Aufnahme eines korrespondierenden Vorsprungs 32 an der zu koppelnden Blende 18 ausgebildet ist. Ist der Vorsprung 32 in die Ausnehmung 30 aufgenommen, so kann sich die Blende nicht mehr relativ zu dem gekoppelten Versorgungsmodul 14 bewegen. Eine Relativbewegung zu dem nächsten benachbarten Versorgungsmodul ist jedoch weiterhin möglich. Durch eine derartige Kopplung kann sichergestellt werden, dass jedes Versorgungsmodul zumindest auf einer Seite seines Anschlussabschnittes 14a durch eine Blende 18 (luftdicht) begrenzt wird.

Wie in Figuren 2a und 2b weiterhin deutlich zu erkennen, kann im Anschlussbereich 14a der Versorgungsmodule 14 ein (im eingebauten Zustand) "oberer" Anbindungsvorsprung 38a und ein "unterer" Anbindungsvorsprung 38b ausgebildet sein, die an der Versorgungsleitung 12 anliegen können und so ebenfalls eine weitestgehend luftdichte Begrenzung im oberen und unteren Bereich des Anschlussabschnittes 14a des Versorgungsmoduls 14 bereitstellen. Alternativ können auch die Führungsschienen 24 und 26 dazu dienen, einen dichtenden Kontakt mit dem Anschlussabschnitt 14a des verbundenen Versorgungsmoduls 14 herzustellen, so dass das Versorgungsmodul 14 an den (im eingebauten Zustand) "oberen" und "unteren" Rändern des Anschlussabschnitts 14a abgedichtet ist.

In Figur 4 ist schließlich der eingebaute Zustand eines erfindungsgemäßen Versorgungssystems 10 gezeigt, bei dem die Versorgungsleitung 12 und die Befestigungsschiene 20 an einem Staufach 40 im oberen Bereich des Passagierraums befestigt sind. Derartige Staufächer sind insbesondere für Passagierräume in Flugzeugen auf Leichtbau ausgelegt und weisen aus diesem Grund oftmals - ohne zusätzliche Versteifung - nicht die nötige Steifigkeit auf, um eine Verformung der Unterseite durch schwere Gepäckstücke zu verhindern. Daher ist bei dieser Ausführungsform besonders vorteilhaft, dass sowohl die Versorgungsleitung 12 als formsteifes Hohlprofil als auch die Befestigungsschiene 20 an der Unterseite eines solchen Staufachs 40 angeordnet sind und dieses auf diese Weise zusätzlich versteifen.

Zwischen den einzelnen Staufächern 40 kann eine Luftzuleitung oder anderweitige Zuleitung von beispielsweise Kabeln über eine entsprechende Ausnehmung 42 in die Versorgungsleitung 12 erfolgen. Dies hat den Vorteil, dass eine einfachere und platzsparendere Zuleitung von Luft und/oder Strom- bzw. Datenkabeln erfolgen kann als bisher der Fall, da diese Zuleitung keiner zusätzlichen Verkleidung bedarf.

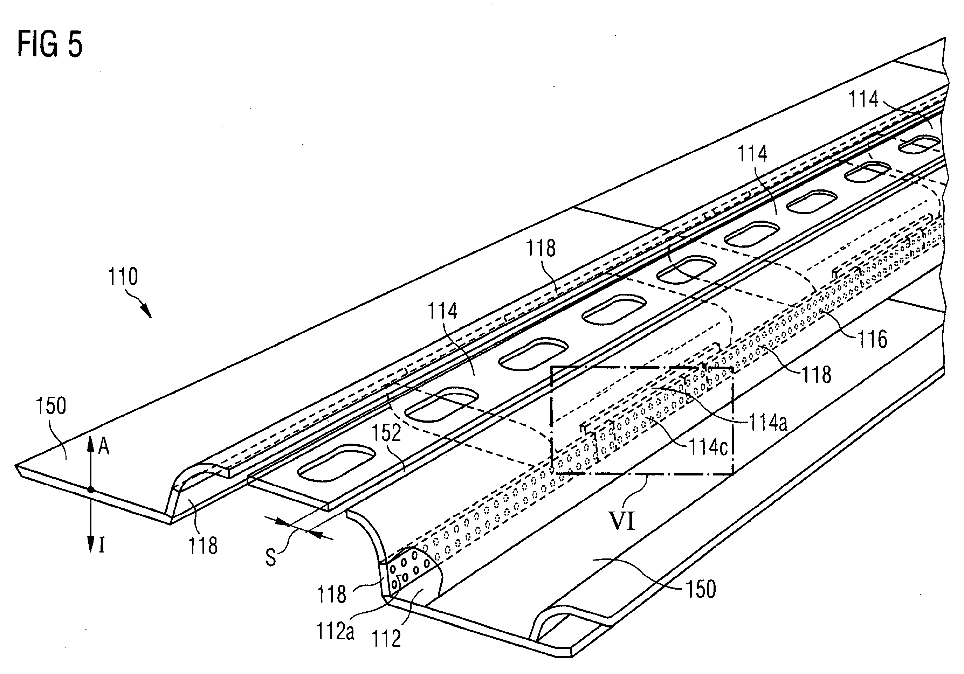

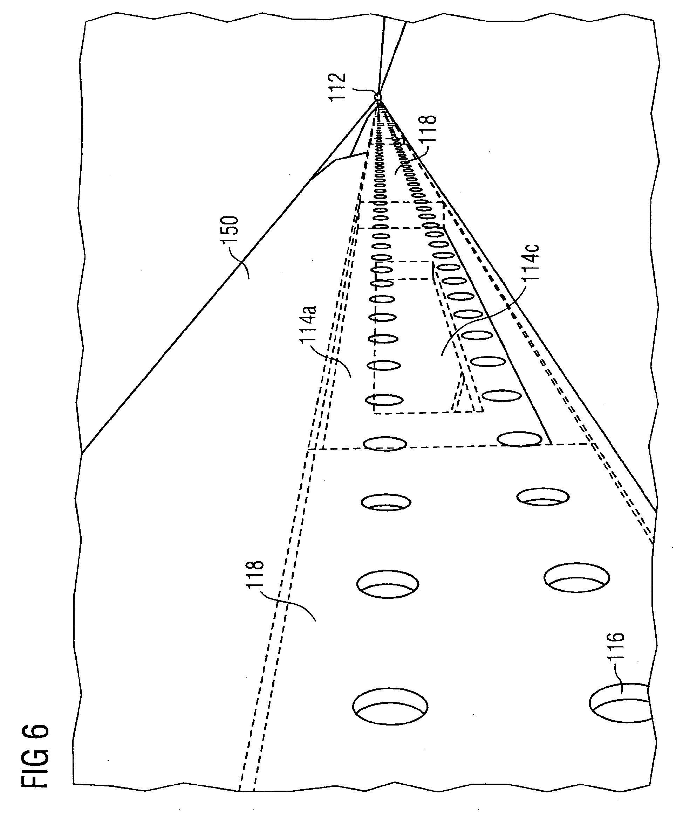

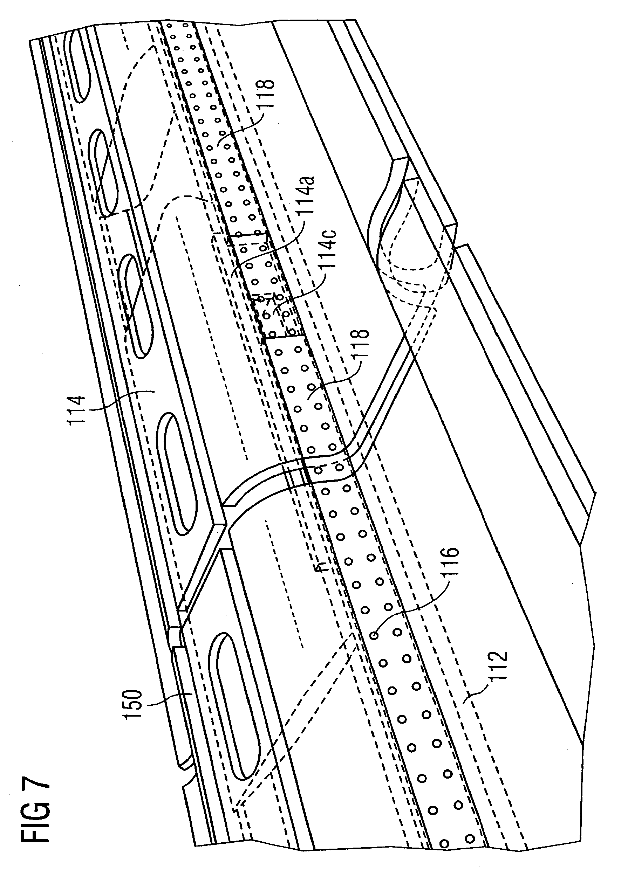

In Figuren 5 bis 7 ist eine zweite Ausführungsform des erfindungsgemäßen Versorgungssystems dargestellt, wobei für die gleichen Bauelemente die gleichen Bezugszeichen verwendet werden, ihnen jedoch die Ziffer "1" vorangestellt ist.

Das Versorgungssystem 110 weist zusätzlich zu der in den Figuren 1 bis 4 gezeigten Ausführungsform eine Abdeckung 150 auf, wobei diese die Versorgungsmodule 114 von der Versorgungsleitung 112 räumlich trennt. Die Versorgungsleitung 112 ist in der zweiten Ausführungsform als Hohlprofil mit einem annähernd runden Querschnitt dargestellt, der zwei abgeflachte Seiten zur Anlage an die Abdeckung 150 aufweist. An einer ersten abgeflachten Seite 112a ist zudem eine durchgängige Perforation 116 vorgesehen.

Die Abdeckung 150 weist eine dem Passagierraum zugewandte Innenseite I sowie eine dem Passagierraum abgewandte Außenseite A auf. An der Außenseite A ist die Versorgungsleitung 112 angeordnet, während die Versorgungsmodule 114 an der Innenseite I angeordnet sind. In einem mittleren Bereich ist die Abdeckung 150 weiterhin in Richtung zu ihrer Außenseite A gewölbt und bildet auf diese Weise einen Kanal, in dem die Versorgungsmodule 114 platzsparend aufgenommen werden können. Die Abdeckung 150 kann zudem an ihrer Innenseite I mit Führungsschienen und dergleichen ausgebildet sein, die eine Führung der Blenden 118 wie auch der Versorgungsmodule 114 entlang der Versorgungsleitung 112 ermöglichen. So kann beispielsweise ein Spalt S vorgesehen sein, der als Führungsnut für einen entsprechenden Vorsprung (nicht dargestellt) an den Versorgungsmodulen 114 dient.

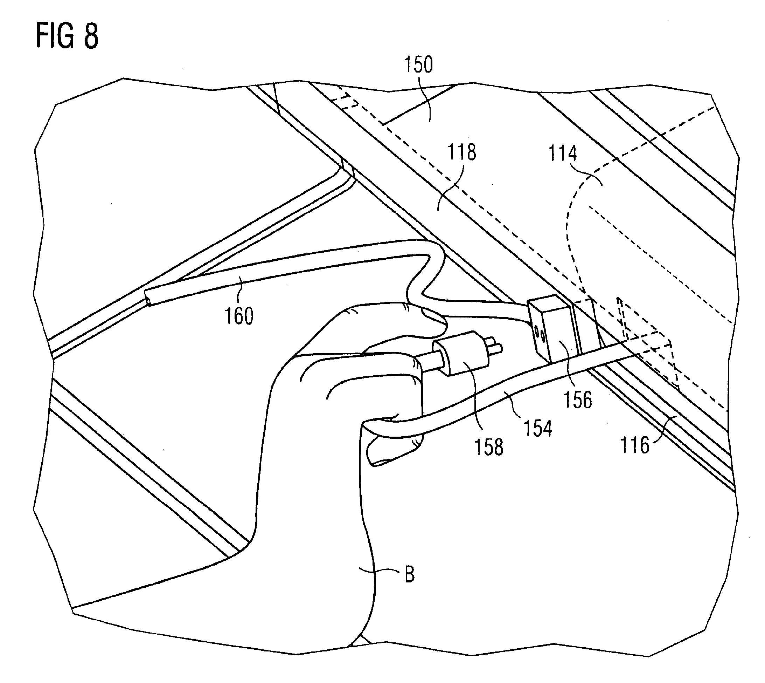

Wie in Figur 8 gezeigt, können die Versorgungsmodule 114 nicht nur zur Versorgung der Passagiere im Passagierraum mit Luft ausgebildet sein, sondern auch Bedienund Komfortelemente umfassen, wie beispielsweise Leselampen, Informationsanzeigen, Lautsprecher für ein Entertainmentsystem und dergleichen. Deren Versorgung erfolgt über Strom- und/oder Datenkabel 154, die zur Verbindung des Versorgungsmoduls mit der Versorgungsleitung mittels einer Schnittstelle 156 verbindbar sind, beispielsweise durch einen Stecker 158, der in die als Steckdose ausgebildete Schnittstelle 156 eingesteckt wird. Die Schnittstelle 156 kann beispielsweise an der Rückseite einer der Blenden 118 angeordnet sein, wodurch sichergestellt wird, dass die nötige Kabellänge der Verbindung 154 in etwa gleich bleibt, da die Blende 118 sich im Wesentlichen zusammen mit dem jeweiligen Versorgungsmodul 114 bewegen kann.

Die Schnittstelle 156 ist über eine Strom- bzw. Datenleitung 160 mit einer Strom- bzw. Datenquelle (nicht dargestellt) verbunden. Diese Datenleitung 160 kann über die Versorgungsleitung 112 geführt werden. Alternativ zu einer Ausführungsform mit Steckkontakten kann im Falle einer gewünschten Stromübertragung auch ein Stromkontakt über eine an dem Versorgungsmodul angeordneten Stromabnehmer erreicht werden, der in leitendem Kontakt (z.B. als Schleif- oder Federkontakt) mit der Versorgungsleitung gehalten wird. Die Blenden 118 könnten in einem solchen Fall isolierend wirken, um jegliche Gefährdung der Passagiere im Passagierinnenraum durch einen Stromschlag zu vermeiden.

Das erfindungsgemäße Versorgungssystem ermöglicht durch seine verschiebbaren Versorgungsmodule eine einfache und schnelle Re-Konfiguration des Sitz-Layouts im Passagierraum, bei der die Versorgungsmodule ohne größere Schwierigkeiten an veränderte Positionen der Sitzreihen im Passagierraum angepasst werden können. Durch das Vorsehen von zusätzlichen, ebenfalls verschiebbaren Blenden wird weiterhin eine durchgängige Verkleidung des Passagierinnenraums ermöglicht, die insbesondere unter sicherheitstechnischen Aspekten vorteilhaft ist, da hierdurch das Verletzungsrisiko der Passagiere herabgesetzt wird. Im Unterschied zu üblichen Verkleidungen sind die Blenden ebenfalls verschiebbar, so dass diese bei einer Re-Konfiguration einfach mitverschoben werden können.

## Patentansprüche

1. Versorgungssystem (10) zur Versorgung von Passagieren in einem Passagierraum eines Fahrzeugs, insbesondere eines Flugzeugs, mit:
- einer Versorgungsleitung (12)
- sowie einer Anzahl von Versorgungsmodulen (14), die zur Versorgung der Passagiere mit der Versorgungsleitung (12) verbindbar sind,
wobei die Versorgungsmodule (14) entlang der Versorgungsleitung (12) relativ zueinander verschiebbar sind,
wobei die Versorgungsleitung (12) eine oder mehrere Versorgungsöffnungen (16) aufweist, durch die die Verbindung zwischen der Versorgungsleitung (12) und den Versorgungsmodulen (14) hergestellt werden kann,
wobei ferner jedem Versorgungsmodul (14) wenigstens eine Blende (18) zugeordnet ist, die derart an der Versorgungsleitung (12) angeordnet ist, dass sie entlang der Versorgungsleitung (12) verschiebbar ist und einen Teil der einen Versorgungsöffnung (16) bzw. der mehreren Versorgungsöffnungen (16) abdecken kann, der nicht für die Verbindung eines Versorgungsmoduls (14) mit der Versorgungsleitung (12) genutzt wird.

2. Versorgungssystem (10) nach Anspruch 1,
wobei jede Blende (18) relativ zu wenigstens einem benachbarten Versorgungsmodul (14) verschiebbar ist.

3. Versorgungssystem (10) nach Anspruch 1 oder 2,
wobei jede Blende (18) wenigstens abschnittsweise mit wenigstens einem benachbarten Versorgungsmodul (14) überlappend angeordnet ist.

4. Versorgungssystem (10) nach einem der Ansprüche 1 bis 3,
wobei jedes Versorgungsmodul (14) einen Vorsprung aufweist, der dazu ausgebildet ist, die Verschiebung wenigstens einer benachbarten Blende (18) entlang der Versorgungsleitung zu begrenzen.

5. Versorgungssystem (10) nach einem der vorhergehenden Ansprüche,
das wenigstens eine Führungsanordnung zur Führung der Versorgungsmodule (14) entlang der Versorgungsleitung (12) aufweist.

6. Versorgungssystem (10) nach einem der vorhergehenden Ansprüche,
wobei die Versorgungsleitung (12) ein Hohlprofil zur Leitung von Luft umfasst, das eine Manteloberfläche (12a) mit Luftauslassöffnungen (16) aufweist und wobei jedes Versorgungsmodul (14) wenigstens eine Anschlussöffnung (14c) zur fluidischen Verbindung mit wenigstens einer Luftauslassöffnung (16) des Hohlprofils aufweist.

7. Versorgungssystem (10) nach Anspruch 6,
wobei die Blenden (18) luftdichtend ausgebildet sind.

8. Versorgungssystem (110) nach einem der vorhergehenden Ansprüche,
das ferner eine sich in einer Längsrichtung (L) erstreckende Abdeckung (150) mit einer vom Passagierraum abgewandten Außenfläche (A) und einer dem Passagierraum zugewandten Innenfläche (I) aufweist, wobei die Versorgungsleitung (112) an der Außenfläche (A) der Abdeckung (150) angeordnet ist und die Versorgungsmodule (114) an der Innenfläche (I) der Abdeckung (150) angeordnet sind, und wobei die Abdeckung (150) eine oder mehrere Versorgungsöffnungen (116) aufweist, durch die die Verbindung zwischen der Versorgungsleitung (112) und den Versorgungsmodulen (114) hergestellt werden kann.

9. Versorgungssystem (110) nach Anspruch 8,
wobei die Blenden (118) an der Innenseite (I) der Abdeckung (150) angeordnet sind.

10. Versorgungssystem (110) nach einem der vorhergehenden Ansprüche,
wobei die Versorgungsleitung (112) eine Daten- und/oder Stromleitung (160) mit Schnittstellen umfasst (156) und wobei die Versorgungsmodule (114) durch die eine oder mehrere Versorgungsöffnungen (116) mit den Schnittstellen (156) verbunden werden können.

## Claims

1. Supply system (10) for supplying passengers in a passenger compartment of a vehicle, in particular an aircraft, having:
- a supply line (12)
- and a number of supply modules (14) which, for supplying the passengers, are connectable to the supply line (12),
the supply modules (14) being displaceable relative to one another along the supply line (12),
the supply line (12) having one or a plurality of supply openings (16), by which the connection between the supply line (12) and the supply modules (14) can be established,
each supply module (14) furthermore being assigned at least one screen (18) which is arranged in such a manner on the supply line (12) that it is displaceable along the supply line (12) and can cover a part of the one supply opening (16) or of the plurality of supply openings (16) which is not used for the connection of a supply module (14) to the supply line (12).

2. Supply system (10) according to Claim 1,
each screen (18) being displaceable relative to at least one adjacent supply module (14).

3. Supply system (10) according to Claim 1 or 2,
each screen (18) being arranged in a manner at least sectionally overlapping with at least one adjacent supply module (14).

4. Supply system (10) according to one of Claims 1 to 3,
each supply module (14) having a projection which is designed to limit the displacement of at least one adjacent screen (18) along the supply line.

5. Supply system (10) according to one of the preceding claims,
which has at least one guide arrangement for guiding the supply modules (14) along the supply line (12).

6. Supply system (10) according to one of the preceding claims,
the supply line (12) comprising a hollow profile for conducting air, which profile has a circumferential surface (12a) with air outlet openings (16), and each supply module (14) having at least one connecting opening (14c) for fluidic connection to at least one air outlet opening (16) of the hollow profile.

7. Supply system (10) according to Claim 6,
the screens (18) being of air-sealing design.

8. Supply system (110) according to one of the preceding claims,
which furthermore has a cover (150) extending in a longitudinal direction (L), with an outer surface (A) facing away from the passenger compartment and with an inner surface (I) facing the passenger compartment, the supply line (112) being arranged on the outer surface (A) of the cover (150) and the supply module (114) being arranged on the inner surface (I) of the cover (150), and the cover (150) having one or a plurality of supply openings (116), by which the connection between the supply line (112) and the supply modules (114) can be established.

9. Supply system (110) according to Claim 8,
the screens (118) being arranged on the inner side (I) of the cover (150).

10. Supply system (110) according to one of the preceding claims,
the supply line (112) comprising a data and/or power line (160) with interfaces (156), and the supply modules (114) being connectable to the interfaces (156) by the one or plurality of supply openings (116).

## Revendications

1. Système (10) d'apport de services pour apporter des services à des passagers dans un compartiment passagers d'un véhicule, en particulier d'un avion, comportant :
- un conduit (12) d'apport de services
- ainsi qu'un certain nombre de modules (14) d'apport de services destinés à être reliés au conduit (12) d'apport de services pour apporter des services aux passagers,
les modules (14) d'apport de services pouvant coulisser les uns par rapport aux autres le long du conduit (12) d'apport de services,
dans lequel le conduit (12) d'apport de services comporte une ou plusieurs ouvertures (16) d'apport de services permettant d'établir la liaison entre le conduit (12) d'apport de services et les modules (14) d'apport de services,
dans lequel en outre au moins un panneau (18) est associé à chaque module d'apport (14) de services et disposé sur le conduit (12) d'apport de services de manière à pouvoir coulisser le long du conduit (12) d'apport de services et à couvrir une partie d'une ouverture (16) d'apport de services ou de plusieurs ouvertures (16) d'apport de services qui n'est pas utilisée pour la liaison d'un module (14) d'apport de services avec le conduit (12) d'apport de services.

2. Système (10) d'apport de services selon la revendication 1,
dans lequel chaque panneau (18) peut coulisser par rapport à au moins un module (14) d'apport de services voisin.

3. Système (10) d'apport de services selon la revendication 1 ou 2,
dans lequel chaque panneau (18) est disposé de manière à chevaucher au moins en partie au moins un module (14) d'apport de services voisin.

4. Système (10) d'apport de services selon l'une des revendications 1 à 3,
dans lequel chaque module (14) d'apport de services comporte une saillie qui est conçue pour limiter le coulissement d'au moins un panneau (18) voisin le long du conduit d'apport de services.

5. Système (10) d'apport de services selon l'une des revendications précédentes,
comportant au moins un agencement de guidage pour guider les modules (14) d'apport de services le long du conduit (12) d'apport de services.

6. Système (10) d'apport de services selon l'une des revendications précédentes,
dans lequel le conduit (12) d'apport de services comprend un profilé creux pour conduire de l'air, qui comporte une surface d'enveloppe (12a) avec des ouvertures (16) de sortie d'air, et dans lequel chaque module (14) d'apport de services comporte au moins une ouverture de raccordement (14c) pour la liaison fluidique avec au moins une ouverture (16) de sortie d'air du profilé creux.

7. Système (10) d'apport de services selon la revendication 6,
dans lequel les panneaux (18) sont conçus étanches à l'air.

8. Système (110) d'apport de services selon l'une des revendications précédentes,
comportant en outre un recouvrement (150) s'étendant dans une direction longitudinale (L) avec une surface extérieure (A) située à l'opposé du compartiment passagers et une surface intérieure (I) tournée vers le compartiment passagers, dans lequel le conduit (112) d'apport de services est disposé sur la surface extérieure (A) du recouvrement (150) et les modules (114) d'apport de services sont disposés sur la surface intérieure (I) du recouvrement (150), et dans lequel le recouvrement (150) comporte une ou plusieurs ouvertures (116) d'apport de services à travers lesquelles la liaison entre le conduit (112) d'apport de services et les modules (114) d'apport de services peut être établie.

9. Système (110) d'apport de services selon la revendication 8,
dans lequel les panneaux (118) sont disposés du côté intérieur (I) du recouvrement (150).

10. Système (110) d'apport de services selon l'une des revendications précédentes,
dans lequel le conduit (112) d'apport de services comprend une ligne de données et/ou de courant (160) avec des interfaces (156), et dans lequel les modules (114) d'apport de services peuvent être reliés aux interfaces (156) par lesdites une ou plusieurs ouvertures (116) d'apport de services.
